# EUROPÄISCHE PATENTSCHRIFT

(11) **EP 2 273 156 B1**
(45) Veröffentlichungstag und Bekanntmachung des Hinweises auf die Patenterteilung: **17.04.2013**
(21) Anmeldenummer: 10167217.8
(22) Anmeldetag: 24.06.2010
(51) Int. Cl.: F16H 25/20, F16C 35/06

(54) **Modulartige Antriebseinrichtung für eine linear bewegbare Spindel**
Modular drive device for a linear spindle
Dispositif d'entraînement de type modulaire pour une broche mobile linéaire

(30) Priorität: 08.07.2009 DE 102009032137
(43) Veröffentlichungstag der Anmeldung: 12.01.2011
(73) Patentinhaber: Schaeffler Technologies AG & Co. KG, 91074 Herzogenaurach (DE)
(72) Erfinder: Bauer, Rudolf, 91074, Herzogenaurach (DE); Vornehm, Harald, 90614, Ammerndorf (DE)

(56) Entgegenhaltungen:
- EP-A1- 1 628 044
- EP-A1- 2 233 789
- DE-C1- 19 535 051
- DE-U1- 9 214 062
- FR-A1- 2 923 281
- US-B1- 6 406 188

## Beschreibung

### Gebiet der Erfindung

Die Erfindung betrifft eine modulartige Antriebseinrichtung für eine linear bewegbare Spindel.

Linear bewegbare Spindeln werden in verschiedenen Anwendungsgebieten eingesetzt, bei denen eine lineare Zustellbewegung oder Antriebsbewegung verwirklicht werden soll. So sind z.B. linear bewegbare Spindeln zur Verstellung von Ventilkörpern in Ventilen oder in Stelleinheiten von Hydrauliksystemen in Kraftfahrzeugen bekannt. Im Allgemeinen ist die Spindel aus einer Gewindestange gebildet, die mit dem Gewinde in eine Spindelmutter eingedreht ist. Die lineare Vorschubbewegung der Spindel kann dann durch die Drehung der Spindel selbst oder durch die Drehung der in Richtung der Vorschubbewegung festgelegten Spindelmutter bewirkt werden. Die lineare Vorschubbewegung selbst wird bei der Drehung einer der Teile durch das Zusammenwirken der Gewinde, der Spindel und der Spindelmutter erzwungen, wobei die Steigung der Gewinde dann das Verhältnis der Vorschubbewegung zu der Drehbewegung bestimmt.

Aus der DE 92 14 062 U1 ist eine solche Vorrichtung zur Umsetzung der Drehbewegung einer Spindelmutter (Wälzmutter) in eine Linearbewegung einer Gewindespindel (Schraubenspindel) nach den Merkmalen des Oberbegriffs des Anspruchs 1 bekannt.

Aus der DE 195 35 051 C1 ist z.B. eine solche Vorrichtung zur Umsetzung der Drehbewegung einer Spindelmutter in eine Linearbewegung einer mit einer Ventilstange gekoppelten Gewindespindel bekannt. Die Vorrichtung ist über einen elektrischen Synchronmotor und ein zwischengeschaltetes Zahnradgetriebe antreibbar. Insgesamt ist die Vorrichtung aus verhältnismäßig vielen Einzelteilen aufgebaut, so dass die Montage der Vorrichtung entsprechend aufwendig ist. Für den Fall eines Defektes des Spindelantriebs muss die gesamte Vorrichtung aufwendig in ihre Einzelteile zerlegt werden und anschließend nach dem Austausch des defekten Teiles wieder zusammengesetzt werden.

Aufgabe der Erfindung ist es, eine Antriebseinrichtung für eine linear bewegbare Spindel zu schaffen, welche kostengünstig in einer Großserienfertigung hergestellt werden kann und bei der eine sehr gute Festlegung des Innenringes gegenüber der Spindelmutter erreicht wird.

Zur Lösung der Aufgabe wird erfindungsgemäß eine modulartige Antriebseinrichtung mit den Merkmalen des Anspruchs 1 vorgeschlagen. Weitere bevorzugte Ausführungsformen der Erfindung sind den Unteransprüchen, der Beschreibung und den zugehörigen Figuren zu entnehmen.

Der Grundgedanke der Erfindung ist darin zu sehen, dass die Antriebseinrichtung modulartig aufgebaut ist und mehrere Baugruppen und Funktionen, wie die Spindelmutter selbst, die Befestigung zu einem externen Gehäuse und die Lagerung der Spindelmutter in sich vereinigt. Die gesamte Antriebseinrichtung kann dadurch vormontiert in einem einzigen Montageschritt montiert werden. Die Anzahl der bei der Endmontage der Gesamtvorrichtung zusammenzufügenden Einzelteile wird dadurch erheblich reduziert, so dass die Montagezeit entsprechend verkürzt wird. Außerdem können die Einzelteile der modulartigen Antriebseinrichtung auch in einem Verbindungsverfahren zusammengefügt werden, welches für eine Großserienfertigung geeignet ist, bei einer Endmontage der Gesamteinrichtung aber nicht zu realisieren wäre. Dies ergibt sich daher, da die Antriebseinrichtung während des Vormontageschrittes einfacher zu handhaben ist, als dies bei der Montage der Einzelteile in der Gesamtvorrichtung während der Endmontage der Fall wäre.

Ferner bietet die modulartig aufgebaute Antriebseinrichtung den Vorteil, dass die Einzelteile während des Vormontageschrittes aufgrund der einfachen Handhabbarkeit des Moduls mit einer wesentlich höheren Genauigkeit zusammengefügt werden können, als dies bei einem Einbau der Einzelteile in der Gesamtvorrichtung in separaten Montageschritten möglich wäre.

Ein weiterer wesentlicher Vorteil der Erfindung schlägt sich darin nieder, dass sowohl der Innenring als auch der Außenring des Lagers ausschließlich mit Teilen der modulartigen Antriebseinrichtung in Verbindung stehen, so dass die Funktion des Lagers nicht durch Toleranzabweichungen externer Bauteile beeinträchtigt werden kann.

Ein weiterer Vorteil der Erfindung besteht darin, dass bei einem Defekt der Spindelmutter, der Lagerung oder anderer Teile der modulartigen Antriebseinrichtung diese in einem einzigen Demontageschritt ausgebaut werden kann, und durch Einbau eines neuen Moduls die Funktionsfähigkeit der Gesamtvorrichtung mit möglichst wenigen Montageschritten schnellst möglichst wieder hergestellt werden kann.

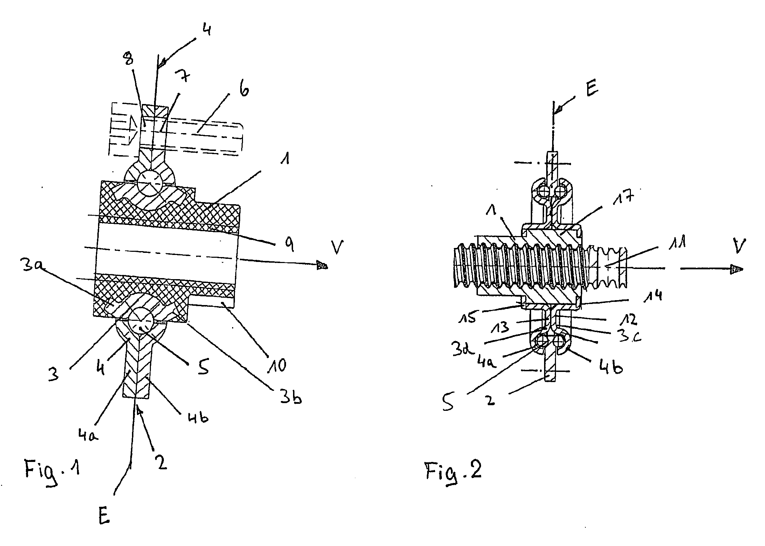

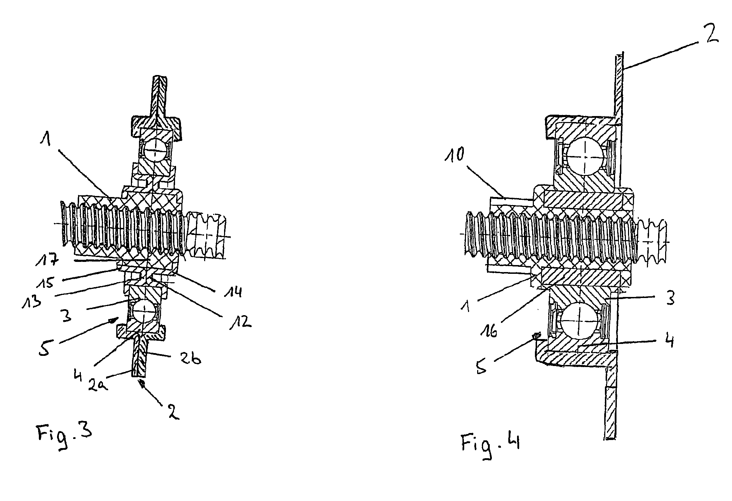

Nachfolgend wird die Erfindung anhand eines bevorzugten Ausführungsbeispiels näher erläutert. In den Figuren sind im Einzelnen zu erkennen, wobei die Figuren 2 und 3 nicht erfindungsgemäß sind:
- Fig.1:: Modulartige Antriebsvorrichtung mit Spindelmutter aus Kunststoff und einem Lager mit umspritztem Innenring
- Fig.2:: Modulartige Antriebsvorrichtung mit aus zwei Halbschalen zu- sammengesetztem Lager
- Fig.3:: Modulartige Antriebsvorrichtung mit einem Lager mit einem über zwei Halbschalen auf der Spindelmutter gehaltenem Innenring
- Fig.4:: Modulartige Antriebsvorrichtung mit einer Spindelmutter aus Kunststoff und einem Lager mit umspritztem Innenring mit in der Spindelmutter angeordneter Lagerbuchse

In Fig.1 ist eine modulartige Antriebsvorrichtung mit einer Spindelmutter 1, einem Befestigungsflansch 2 und einem zwischen beiden Teilen angeordneten Lager 5 zu erkennen. Die Spindelmutter 1 ist radial innenseitig mit einem Innengewinde 9 versehen, in das eine Spindel 11 mit einem Außengewinde eindrehbar ist (siehe auch Fig. 2-4). Die Spindelmutter 1 ist an ihrer Außenseite mit einem Profil 10 versehen, durch welches eine Drehbewegung durch Mitnahme übertragbar ist. Die Drehbewegung kann z.B. durch Drehen der Spindelmutter 1 per Hand, durch Eingriff eines Zahnrades eines Getriebes oder auch durch direkte Kopplung mit einem elektromotorischen Antrieb eingeleitet werden, wobei das Profil 10 zur Übertragung des dabei wirkenden Drehmomentes dient.

Das Lager 5 ist aus einem Innenring 3, einem Außenring 4 und zwischen beiden angeordneten Wälzkörpern gebildet. Der Innenring 3 ist mittig rinnenförmig und an den Rändern jeweils zu einem in die Spindelmutter 1 eindringenden Wulst 3a und 3b geformt. Der Innenring 3 wird bei der Herstellung der Spindelmutter 1 aus Kunststoff in einem Spritzvorgang mit umspritzt, so dass der Innenring 3 und die Spindelmutter 1 anschließend einen festen Verbund bilden. Diese Art der Verbindung bietet sich insofern an, da sie kostengünstig in einer Großserienfertigung hergestellt werden kann und außerdem eine sehr gute Festlegung des Innenringes 3 in Verschieberichtung V der Spindel 11 gegenüber der Spindelmutter 1 darstellt.

Der Außenring 4 ist aus zwei Halbschalen 4a und 4b zusammengesetzt und geht radial nach außen einstückig in den Befestigungsflansch 2 über. Die Halbschalen 4a und 4b sind spiegelsymmetrisch ausgebildet und in einer Ebene E zusammengefügt, die im Wesentlichen senkrecht zu der Verschieberichtung V ausgerichtet ist. Aufgrund der spiegelsymmetrischen Formgebung der Halbschalen 4a und 4b können identische Teile für die Halbschalen 4a und 4b verwendet werden, so dass die Teilevielfalt reduziert ist, und die Halbschalen 4a und 4b kostengünstig in einer möglichst großen Stückzahl hergestellt werden können. Da das Modul der Antriebseinrichtung während des Vormontageprozesses wesentlich einfacher zu handhaben ist als die Gesamtvorrichtung bei der Endmontage, können die Halbschalen 4a und 4b in einem kostengünstigen und auch großserientauglichen Verbindungsverfahren, wie z.B. Schweißen oder Nieten, zusammengefügt werden.

An dem radial außen in den Befestigungsflansch 2 übergehenden Bereich der Halbschalen 4a und 4b sind zwei Öffnungen 7 und 8 vorgesehen, die bei miteinander verbundenen Halbschalen 4a und 4b zueinander fluchtend ausgerichtet sind, so dass die gesamte modulartige Antriebsvorrichtung über angedeutete Befestigungsschrauben 6 an einem externen Gehäuse befestigbar ist.

In Fig.2 ist eine Ausführungsform zu erkennen, bei der die Halbschalen 4a und 4b nicht nur den Außenring 4 des Lagers 5 bilden, sondern auch über teilkreisförmige Abschnitte 3c und 3d den Innenring 3. Zwischen die Halbschalen 4a und 4b ragt von außen der Befestigungsflansch 2, der durch entsprechende Formgebung in diesem Bereich ebenfalls zur Lagerung beiträgt. Die Halbschalen 4a und 4b gehen in ihrem weiteren Verlauf radial nach innen in ringförmige flache aneinander anliegende Abschnitte 12 und 13 über, über welche die Halbschalen 4a und 4b aneinander anliegend, z.B. durch Punktschweißverbindungen, befestigt sind. An die ringförmigen Abschnitte 12 und 13 sich anschließend gehen die Halbschalen 4a und 4b in Klemmkrallen 14 und 15 über, die einen Absatz 17 der Spindelmutter 1 umgreifen und so die Spindelmutter 1 gegenüber dem Lager 5 und dem Befestigungsflansch 2 in Bewegungsrichtung V der Spindel 11 festlegen.

In Fig.3 ist eine weitere Ausführungsform zu erkennen, bei der der Innenring 3 des Lagers 5 über einen ringförmigen zweiteiligen Halter fixiert ist, der wiederum aus zwei spiegelsymmetrischen Hälften mit zwei aneinander anliegenden flachen über Punktschweißverbindungen miteinander verbundenen Mittelstegen 12 und 13 und zwei einen Absatz 17 der Spindelmutter 1 zwischen sich einklemmenden Klemmkrallen 14 und 15 gebildet ist. Das Lager 5 kann ein handelsübliches Standardlager sein. Der Befestigungsflansch 2 ist ebenfalls aus zwei Halbschalen 2a und 2b gebildet, die im zusammengefügten Zustand den Außenring 4 des Lagers 5 klemmartig umgreifen.

In der Fig.4 ist eine Ausführungsform der Erfindung zu erkennen, bei der eine Lagerbuchse 16 zusammen mit dem Innenring 3 des Lagers 5 bei der Herstellung der Spindelmutter 1 mit Kunststoff umspritzt ist. Die Lagerbuchse 16 bietet den Vorteil, dass die wirkenden Lagerkräfte besser verteilt werden, und die Spindelmutter 1 in sich formstabilisiert wird. Das Lager 5 ist ebenfalls ein handelsübliches Standardlager. Die Verwendung von Standardlagern ist in sofern von Vorteil, da das Lagerspiel dadurch nicht durch den Zusammenbau der Antriebsvorrichtung verändert wird, sondern allein durch das Standardlager selbst bestimmt wird. Der Befestigungsflansch 2 ist bei dieser Ausführungsform einteilig ausgeführt und umfasst den Außenring 4 des Lagers 5. Die Verbindung zwischen dem Befestigungsflansch 2 und dem Außenring 4 ist dabei so gewählt, z.B. durch eine Presspassung, dass beide Teile verliersicher miteinander verbunden sind.

Insgesamt ist es für die Erfindung wichtig, dass die Spindelmutter 1 über den Befestigungsflansch 2 in Bewegungsrichtung V der Spindel 11 gegenüber dem externen Gehäuse festgelegt ist, so dass die Drehbewegung der Spindelmutter 1 in eine Linearbewegung der Spindel 11 umgesetzt wird, und die dabei wirkenden Axialkräfte über das Lager 5 und den Befestigungsflansch 2 in das Gehäuse weitergeleitet werden. Aufgrund der modularen Ausbildung der Antriebseinrichtung wird mit der Befestigung derselben über den Befestigungsflansch 2 die Spindelmutter 1 einschließlich deren Lagerung in einem einzigen Montageschritt an dem Gehäuse befestigt. Dabei ist die Lagerung von besonderer Bedeutung, da sie sowohl die Drehbewegung der Spindelmutter 1 ermöglicht, als auch die Spindelmutter 1 gegenüber dem Gehäuse in Axialrichtung festlegt, indem das Lager 5 mit dem Außenring 4 gegenüber dem Befestigungsflansch 2 und mit dem Innenring 3 gegenüber der Spindelmutter 1 festgelegt ist.

Wichtig bei der Erfindung ist, dass die modulartige Antriebseinrichtung bereits sämtliche zu ihrer Funktion benötigten Bauteile umfasst, wobei auch die Spindel 11 bereits vormontiert Bestandteil dieser sein kann.

### Bezugszeichenliste

- 1: Spindelmutter
- 2: Befestigungsflansch
- 2a,2b: Halbschalen
- 3: Innenring
- 3a,3b: Wulst
- 3c,3d: Halbschalen
- 4: Außenring
- 4a,4b: Halbschalen
- 5: Lager
- 6: Befestigungsschraube
- 7: Öffnung
- 8: Öffnung
- 9: Innengewinde
- 10: Profil
- 11: Spindel
- 12,13: Mittelstege
- 14,15: Klemmkrallen
- 16: Lagerbuchse
- 17: Absatz
- V: Bewegungsrichtung der Spindel 11

## Patentansprüche

1. Modulartige Antriebseinrichtung für eine linear bewegbare Spindel (11) umfassend:
- eine drehbar gelagerte Spindelmutter (1),
- einen Befestigungsflansch (2) zur Befestigung der Antriebseinrichtung an einem externen Gehäuse,
- ein zwischen dem Befestigungsflansch (2) und der Spindelmutter (1) angeordnetes Lager (5), mit
- einem an der Spindelmutter (1) in Richtung der Bewegung der Spindel (11) festgelegten Innenring (3), und
- einem an dem Befestigungsflansch (2) in Richtung der Bewegung der Spindel (11) festgelegten Außenring (4),
**dadurch gekennzeichnet, dass** die Spindelmutter (1) aus Kunststoff gebildet ist, und der Innenring (3) durch wenigstens abschnittsweises Umspritzen mit dem Kunststoff der Spindelmutter (1) mit dieser verbunden ist.

2. Modulartige Antriebseinrichtung nach Anspruch 1, **dadurch gekennzeichnet, dass** der Außenring (4) einstückig mit dem Befestigungsflansch (2) ausgebildet ist.

3. Modulartige Antriebseinrichtung nach einem der vorangegangenen Ansprüche, **dadurch gekennzeichnet, dass** der Außenring (4) und/oder der Innenring (3) aus wenigstens zwei Halbschalen (4a,4b,3c,3d) zusammengesetzt sind.

4. Modulartige Antriebseinrichtung nach Anspruch 3, **dadurch gekennzeichnet, dass** die Halbschalen (4a,4b,3c,3d) in einer Ebene (E) aneinander anliegen, welche im Wesentlichen senkrecht zu der Bewegungsrichtung (V) der Spindel (11) ausgerichtet ist.

5. Modulartige Antriebseinrichtung nach einem der Ansprüche 3 oder 4, **dadurch gekennzeichnet, dass** die Halbschalen (4a,4b,3c,3d) derart geformt sind, dass sie im zusammengesetzten Zustand spiegelsymmetrisch sind.

6. Modulartige Antriebseinrichtung nach Anspruch 1, **dadurch gekennzeichnet, dass** der Innenring (3) wenigstens an einem Rand zu einem in die Spindelmutter (1) eindringenden Wulst (3a,3b) geformt ist.

7. Modulartige Antriebseinrichtung nach einem der vorangegangenen Abschnitte, **dadurch gekennzeichnet, dass** die Spindelmutter (1) außenseitig ein Profil (10) zur Übertragung einer Drehbewegung aufweist.

## Claims

1. Modular drive device for a linearly movable spindle (11) comprising:
- a rotatably mounted spindle nut (1),
- a fastening flange (2) for fastening the drive device to an external housing,
- a bearing (5) which is arranged between the fastening flange (2) and the spindle nut (1), and
- an inner ring (3) which is fixed on the spindle nut (1) in the direction of the movement of the spindle (11), and
- an outer ring (4) which is fixed on the fastening flange (2) in the direction of the movement of the spindle (11),
**characterized in that** the spindle nut (1) is formed from plastic, and the inner ring (3) is connected to the spindle nut (1) by injection-moulding encapsulation at least in sections with the plastic of the said spindle nut (1).

2. Modular drive device according to Claim 1, **characterized in that** the outer ring (4) is configured in one piece with the fastening flange (2).

3. Modular drive device according to one of the preceding claims, **characterized in that** the outer ring (4) and/or the inner ring (3) are/is assembled from at least two half shells (4a, 4b, 3c, 3d).

4. Modular drive device according to Claim 3, **characterized in that** the half shells (4a, 4b, 3c, 3d) bear against one another in a plane (E) which is oriented substantially perpendicularly with respect to the movement direction (V) of the spindle (11).

5. Modular drive device according to either of Claims 3 and 4, **characterized in that** the half shells (4a, 4b, 3c, 3d) are shaped in such a way that they are mirror-symmetrical in the assembled state.

6. Modular drive device according to Claim 1, **characterized in that** the inner ring (3) is shaped at least at one edge to produce a bead (3a, 3b) which penetrates into the spindle nut (1).

7. Modular drive device according to one of the preceding claims, **characterized in that**, on the outer side, the spindle nut (1) has a profile (10) for transmitting a rotational movement.

## Revendications

1. Dispositif d'entraînement de type modulaire pour une broche (11) déplaçable linéairement, comprenant :
- un écrou de broche (1) monté à rotation,
- une bride de fixation (2) pour la fixation du dispositif d'entraînement sur un boîtier externe,
- un palier (5) disposé entre la bride de fixation (2) et l'écrou de broche (1), avec
- une bague interne (3) fixée sur l'écrou de broche (1) dans la direction du mouvement de la broche (11) et
- une bague externe (4) fixée sur la bride de fixation (2) dans la direction du mouvement de la broche (11),
**caractérisé en ce que** l'écrou de broche (1) est réalisé en plastique et la bague interne (3) est connectée à celui-ci par un surmoulage au moins partiel avec le plastique de l'écrou de broche (1).

2. Dispositif d'entraînement de type modulaire selon la revendication 1, **caractérisé en ce que** la bague externe (4) est réalisée d'une seule pièce avec la bride de fixation (2).

3. Dispositif d'entraînement de type modulaire selon l'une quelconque des revendications précédentes, **caractérisé en ce que** la bague externe (4) et/ou la bague interne (3) sont constituées d'au moins deux demi-coques (4a, 4b, 3c, 3d).

4. Dispositif d'entraînement de type modulaire selon la revendication 3, **caractérisé en ce que** les demi-coques (4a, 4b, 3c, 3d) s'appliquent l'une contre l'autre dans un plan (E), qui est orienté essentiellement perpendiculairement à la direction de déplacement (V) de la broche (11).

5. Dispositif d'entraînement de type modulaire selon l'une quelconque des revendications 3 ou 4, **caractérisé en ce que** les demi-coques (4a, 4b, 3c, 3d) sont formées de telle sorte qu'elles sont symétriques suivant une symétrie spéculaire dans l'état assemblé.

6. Dispositif d'entraînement de type modulaire selon la revendication 1, **caractérisé en ce que** la bague interne (3) est formée au moins sur un bord pour créer un bourrelet (3a, 3b) pénétrant dans l'écrou de broche (1).

7. Dispositif d'entraînement de type modulaire selon l'une quelconque des revendications précédentes, **caractérisé en ce que** l'écrou de broche (1) présente sur le côté extérieur un profilé (10) pour le transfert d'un mouvement de rotation.
